# FASCICULE DE BREVET EUROPEEN

(11) **EP 3 503 508 B1**
(45) Date de publication et mention de la délivrance du brevet: **26.01.2022**
(21) Numéro de dépôt: 18215768.5
(22) Date de dépôt: 21.12.2018
(51) Int. Cl.: H04L 29/06, H04L 29/12

(54) **PROCÉDÉ DE TRAITEMENT DE REQUÊTES ET SERVEUR PROXY**
VERFAHREN ZUR VERARBEITUNG VON ANFRAGEN, UND PROXY-SERVER
METHOD FOR PROCESSING REQUESTS AND PROXY SERVER

(30) Priorité: 21.12.2017 FR 1762837
(43) Date de publication de la demande: 26.06.2019
(73) Titulaire: ORANGE, 92130 Issy-les-Moulineaux (FR)
(72) Inventeur: DESBUREAUX, Sylvain, 22300 Lannion (FR); FRECHIN, Régis, 22700 Louannec (FR); DURO, Jean-Marc, 22300 Lannion (FR)
(74) Mandataire: Cabinet Beau de Loménie

(56) Documents cités:
- EP-A1- 2 827 549
- WO-A1-2017/177381
- FR-A1- 3 031 426
- US-A1- 2006 143 702
- US-A1- 2013 347 072
- US-A1- 2016 261 564

## Description

L'invention se rapporte au domaine général des télécommunications.

Elle concerne plus particulièrement l'accès par un terminal d'un utilisateur qui a établi un tunnel de communication avec un premier réseau à un site se trouvant dans un deuxième réseau distinct du premier réseau.

L'invention a ainsi une application privilégiée mais non limitative lorsque le terminal de l'utilisateur est en situation de mobilité et dispose d'une connexion Internet, via laquelle il a établi un tunnel sécurisé et crypté avec un réseau privé (par exemple un réseau d'entreprise), et que l'utilisateur du terminal souhaite accéder à un site se trouvant dans le réseau public Internet.

Deux options sont retenues aujourd'hui dans l'état de la technique pour gérer une telle situation.

Selon une première option, le terminal est paramétré pour émettre tous ses flux de données, via le tunnel de communication sécurisé qu'il a établi avec le réseau privé, que ces flux de données soient destinés ou non à des entités appartenant au réseau privé. C'est ensuite à charge pour le réseau privé, par l'intermédiaire par exemple d'une passerelle programmée à cet effet, de réorienter à l'extérieur du réseau privé les flux de données qui sont destinés à des entités (ex. des sites web) situées en dehors de celui-ci. Cette première option permet au réseau privé de contrôler les flux de données émis et reçus par le terminal et de garantir un certain niveau de sécurité, via notamment la mise en oeuvre d'un filtrage de ces flux de données au moyen d'un pare-feu par exemple. Cette première option est toutefois consommatrice en bande passante, et peut être à l'origine d'une expérience dégradée de l'utilisateur. Celui-ci doit en effet partager la bande passante du réseau privé avec les autres utilisateurs de ce réseau, et le chemin emprunté par les flux de données qu'il émet à destination des entités hors du réseau privé peut être détourné et plus long que s'il accédait directement à ces entités.

Selon une deuxième option, le terminal peut être configuré pour émettre les flux de données qui sont destinés à des entités situées en dehors du réseau privé directement vers ces entités, c'est-à-dire sans utiliser le tunnel de communication qu'il a établi préalablement avec le réseau privé. Cette deuxième option est également connue sous le nom anglais de « local breakout ». Elle permet d'améliorer l'expérience utilisateur qui bénéficie d'un accès direct et donc plus rapide aux entités auxquelles il souhaite accéder. Toutefois elle n'est pas satisfaisante en termes de sécurité pour le réseau privé : l'administrateur du réseau privé n'a en effet plus aucun moyen de contrôle ni aucune visibilité sur les flux de données qui transitent depuis ou vers le terminal en dehors du réseau privé, et qui peuvent par exemple être porteurs de malware.

Le document US 2016/261564 A1 décrit un tunnel VPN établi entre un terminal et un serveur VPN d'un réseau cloud. De plus, un service de résolution de noms de domaines (DNS) est fourni au terminal par un serveur proxy DNS. Le terminal envoie ainsi des requêtes de résolution d'un nom de domaine au serveur proxy DNS.

Le document US 2013/347072 A1 décrit un connecteur de type PTN ("Private Tunnel Network"). Le connecteur PTN permet de connecter un terminal d'un utilisateur à un réseau (par exemple un réseau d'un fournisseur de services ou d'entreprise). De plus, le connecteur PTN est connecté à un serveur PTN (PTN Domain Server). Le serveur PTN gère des accès à des ressources par différents terminaux qui lui sont connectés via des connecteurs tels que le connecteur PTN précité. Ces différents terminaux et leurs ressources, ainsi que le serveur PTN, forment un réseau cloud. Le connecteur PTN envoie des requêtes d'un terminal vers un serveur DNS.

### Objet et résumé de l'invention

L'invention permet notamment de remédier aux inconvénients précités en proposant un procédé de traitement de requêtes, mis en oeuvre par un serveur proxy de résolution de noms de domaine d'un premier réseau de communication accessible par un terminal d'un utilisateur via un tunnel de communication établi sur un deuxième réseau de télécommunications, ledit procédé de traitement comprenant, sur réception d'une requête de résolution d'un nom de domaine en provenance du terminal émise via le tunnel de communication :
- une étape d'obtention d'un identifiant de l'utilisateur à partir d'au moins une information contenue dans un champ de la requête ;
- une étape de détermination, en utilisant ledit identifiant de l'utilisateur, si cet utilisateur est autorisé à accéder ou non audit nom de domaine ;
- si l'utilisateur est autorisé à accéder au nom de domaine, une étape d'envoi au terminal via le tunnel de communication d'une adresse IP correspondant au nom de domaine accessible par le terminal via ledit deuxième réseau de communication ;
- sinon, une étape de rejet de la requête du terminal.

Corrélativement, l'invention vise aussi un serveur proxy de résolution de noms de domaine appartenant à un premier réseau de communication accessible par un terminal d'un utilisateur via un tunnel de communication établi sur un deuxième réseau de communications, ledit serveur proxy comprenant une pluralité de modules activés sur réception d'une requête de résolution d'un nom de domaine en provenance du terminal émise via le tunnel de communication, ladite pluralité de modules comprenant :
- un module d'obtention, configuré pour obtenir un identifiant de l'utilisateur à partir d'au moins une information contenue dans un champ de la requête ;
- un module de détermination, configuré pour déterminer en utilisant ledit identifiant de l'utilisateur, si cet utilisateur est autorisé à accéder ou non audit nom de domaine ;
- un module d'envoi, activé si l'utilisateur est autorisé à accéder au nom de domaine et configuré pour envoyer au terminal via le tunnel de communication une adresse IP correspondant au nom de domaine accessible par le terminal via ledit deuxième réseau de communication ; et
- un module de rejet, activé sinon, configuré pour rejeter la requête du terminal.

A titre illustratif, le premier réseau de communication est par exemple un réseau privé d'entreprise tandis que le deuxième réseau est le réseau public Internet. L'invention s'applique toutefois dans bien d'autres contextes et à d'autres réseaux de communication qu'ils soient privés ou publics.

Grâce au serveur proxy de résolution de noms de domaine (aussi désigné par serveur proxy DNS) prévu dans le premier réseau de communication par l'invention, l'administrateur du premier réseau de communication est en mesure de garder un contrôle sur les flux de données émis par le terminal de l'utilisateur et destinés à des entités situées en dehors du premier réseau tout en permettant au terminal d'accéder directement à ces entités. En effet, l'invention prévoit avantageusement qu'une requête de résolution d'un nom de domaine émise par le terminal soit traitée, dès lors qu'un tunnel est établi entre le terminal et le premier réseau, par le serveur proxy DNS implémenté dans le premier réseau. Ce serveur proxy DNS est non seulement configuré pour réaliser une résolution du nom de domaine requis par le terminal tel un serveur DNS classique, mais il est également, conformément à l'invention, configuré pour conditionner cette résolution ou tout du moins la communication au terminal de l'utilisateur de l'adresse IP issue le cas échéant d'une telle résolution, au fait que l'utilisateur est autorisé à accéder au site portant le nom de domaine requis. L'administrateur du premier réseau peut ainsi opérer un filtrage des sites auxquels accède l'utilisateur du terminal en dehors du premier réseau, selon ses propres règles de sécurité. En d'autres mots, bien que l'utilisateur puisse accéder à des sites situés en dehors du premier réseau directement, sans passer par le tunnel de communication établi avec le premier réseau, l'administrateur du réseau peut continuer à appliquer certaines règles de sécurité à cet utilisateur comme si celui-ci passait pour accéder à ces sites, par le premier réseau.

Grâce à l'invention, l'expérience de l'utilisateur est donc améliorée (on évite notamment la saturation de la bande passante du premier réseau pour satisfaire des requêtes d'accès à des entités situées en dehors du premier réseau, par exemple sur le réseau Internet), tout en s'assurant du respect des règles de sécurité édictées par l'administrateur du premier réseau en matière de contrôle d'accès. L'invention offre donc une solution centralisée qui permet de préserver la sécurité du premier réseau. Elle a une application privilégiée mais non limitative lorsque le terminal de l'utilisateur se trouve dans une situation de mobilité.

On note que l'invention permet à l'administrateur du premier réseau de définir de façon dynamique (en temps réel) les règles de contrôle d'accès qu'il souhaite voir appliquer par le serveur proxy DNS. Ces règles peuvent par exemple consister en une ou plusieurs listes d'URL (noms de domaine), chaque liste pouvant correspondre à une thématique différente, et étant associée aux utilisateurs ou groupes d'utilisateurs autorisés (ou au contraire non autorisés) à accéder aux URL de cette liste ou correspondant à la même thématique. L'invention apporte donc un certain degré de granularité et une certaine flexibilité à l'administrateur du premier réseau.

Dans un exemple de réalisation, lors de l'étape d'obtention, l'identifiant de l'utilisateur est obtenu par le serveur proxy à partir d'une adresse IP allouée au terminal lors de l'établissement du tunnel de communication contenue dans la requête.

Cet exemple de réalisation est particulièrement simple à mettre en œuvre. Il suffit de mémoriser, lors de l'établissement du tunnel de communication entre le terminal et le premier réseau, par exemple au niveau d'une base de données maintenue par le serveur proxy DNS ou accessible par celui-ci, l'adresse IP allouée au terminal sur le premier réseau en association avec un identifiant de l'utilisateur du terminal (par exemple son nom, éventuellement complété de son prénom). L'adresse IP allouée au terminal est présente dans le champ contenant l'adresse IP source de la requête DNS et peut donc être facilement extraite de la requête DNS par le serveur proxy DNS. L'identifiant de l'utilisateur du terminal associé à l'adresse IP contenue dans le requête DNS permet ensuite d'accéder rapidement et simplement aux droits d'accès (au sens large du terme, c'est-à-dire autorisations et non autorisations d'accéder à certains noms de domaine), fixés par l'administrateur du premier réseau pour ses utilisateurs. Cela permet en outre à l'administrateur du premier réseau de définir des groupes d'utilisateurs avec des droits d'accès différents.

Dans un exemple, l'étape de détermination comprend l'interrogation d'au moins un serveur de résolution de noms de domaine appartenant au premier réseau ou à un troisième réseau distinct du premier réseau.

Comme mentionné précédemment, le serveur DNS proxy selon l'invention est en mesure de réaliser une résolution du nom de domaine transmis par le terminal et peut, à cet effet, consulter des serveurs tiers s'il ne dispose pas lui-même de l'information requise pour procéder à cette résolution.

Dans un exemple, le procédé de traitement comprend en outre, si l'utilisateur est autorisé à accéder au nom de domaine, une étape de déclenchement d'une configuration du terminal par un équipement du premier réseau pour lui permettre de transmettre au moins un flux de données à destination de ladite adresse IP en dehors dudit tunnel de communication.

L'équipement du premier réseau réalisant la configuration du terminal peut être un serveur du premier réseau distinct du serveur proxy DNS.

Cet exemple présente un avantage particulier lorsque le terminal est configuré initialement pour n'utiliser que le tunnel de communication établi avec le premier terminal pour transmettre ses requêtes DNS et ses flux de données. La configuration du terminal prévue dans ce mode de réalisation permet en effet d'autoriser le terminal à router le trafic relatif à des sites situés en dehors du premier réseau via le deuxième réseau, sans passer par le tunnel s'il le juge opportun.

Dans un exemple de réalisation, cette étape de configuration peut ne pas être mise en oeuvre si le terminal est déjà configuré de la sorte. Dans ce cas c'est la réception de l'adresse IP correspondant au nom de domaine pour lequel le terminal a requis une résolution qui permet au terminal s'il le juge opportun en fonction des tables de routage dont il dispose, de router le trafic destiné à cette adresse IP en dehors du tunnel de communication.

Dans un exemple, les différentes étapes du procédé de traitement sont déterminées par des instructions de programmes d'ordinateurs.

En conséquence, l'invention vise aussi un programme d'ordinateur sur un support d'informations, ce programme étant susceptible d'être mis en oeuvre dans un serveur proxy DNS du premier réseau ou plus généralement dans un ordinateur, ce programme comportant des instructions adaptées à la mise en oeuvre des étapes d'un procédé de traitement tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Le support d'informations ou d'enregistrement peut être un circuit intégré dans lequel le programme est incorporé, le circuit étant adapté pour exécuter ou pour être utilisé dans l'exécution du procédé en question.

Selon un autre aspect, l'invention porte également sur un système de communication comprenant :
- un terminal d'un utilisateur, configuré pour établir avec un premier réseau de communication, un tunnel de communication sur un deuxième réseau de communication ; et
- un serveur proxy de résolution de noms de domaine du premier réseau de communication, conforme à l'invention ;
le terminal étant en outre configuré pour :
- envoyer au serveur proxy, via le tunnel de communication, toutes ses requêtes de résolution de noms de domaine ; et pour
- lorsqu'il reçoit du serveur proxy en réponse à une requête de résolution d'un nom de domaine une adresse IP correspondant audit nom de domaine, pouvoir transmettre au moins un flux de données à destination de ladite adresse IP en dehors du tunnel de communication.

Dans un exemple de réalisation, le système de communication comprend en outre un équipement appartenant au premier réseau de communication, activé lorsque l'utilisateur est autorisé à accéder au nom de domaine, et paramétrer pour configurer le terminal pour lui permettre de transmettre un flux de données à destination de ladite adresse IP en dehors dudit tunnel de communication.

Dans un exemple de réalisation, le tunnel de communication établi entre le terminal et le premier réseau est sécurisé.

Il peut s'agir par exemple d'un tunnel VPN (Virtual Private Network).

Le système de communication selon l'invention bénéficie des mêmes avantages mentionnés précédemment que le procédé de traitement et le serveur proxy DNS.

Dans un autre exemple de réalisation de l'invention, le système de communication comprend en outre un équipement appartenant au premier réseau de communication, et paramétré pour configurer le terminal pour :
- lui permettre de transmettre au moins un flux de données en dehors dudit tunnel de communication lorsque ledit flux de données vérifie au moins un premier critère prédéterminé ; et/ou
- lui imposer de transmettre au moins un flux de données via ledit tunnel de communication lorsque ledit flux de données vérifie au moins un deuxième critère prédéterminé.

Ceci permet à l'administrateur du premier réseau de disposer d'une certaine granularité quant à la configuration du terminal et son droit d'accéder directement ou non à un site situé en dehors du premier réseau. Le premier et le deuxième critère peuvent porter sur une ou plusieurs adresses IP spécifiques, ou sur une ou plusieurs plages d'adresses IP, mais également sur des protocoles, des ports source et destination, etc. Ceci permet de filtrer, par exemple sur la base de liste d'adresse IP, les sites accessibles directement par le terminal (sans passer par le tunnel de communication). Il est ainsi possible de bloquer l'accès à des applications potentiellement dangereuses ne générant pas de requêtes DNS préalables, en les forçant à emprunter le tunnel de communication.

On peut également envisager, dans d'autres exemples, que le procédé de traitement, le serveur proxy et le système de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système de communication conforme à l'invention, dans un mode particulier de réalisation ;
- la figure 2 représente l'architecture matérielle d'un serveur proxy DNS du système de communication de la figure 1, conforme à l'invention ; et
- la figure 3 illustre sous forme d'ordinogramme, les principales étapes du procédé de traitement selon l'invention, telles qu'elles sont mises en œuvre par le serveur proxy DNS de la figure 2, dans un mode particulier de réalisation.

### Description détaillée de l'invention

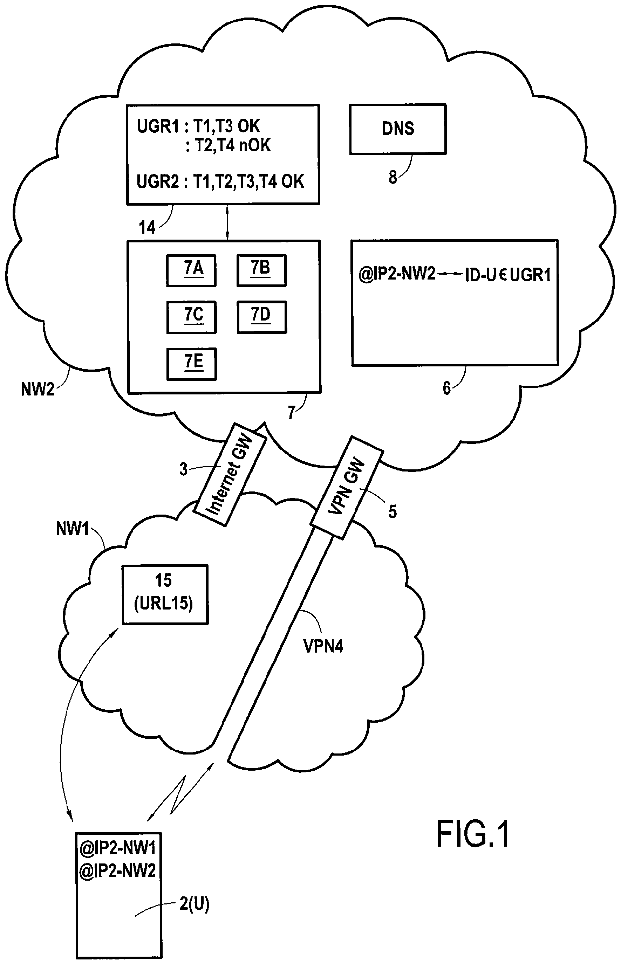

La **figure 1** représente un système de communication 1 conforme à l'invention, dans un mode particulier de réalisation.

Dans l'exemple envisagé à la figure 1, le système de communication 1 comprend un terminal 2 d'un utilisateur U disposant d'une interface de communication lui permettant de se connecter à un réseau NW1. Le réseau NW1 est par exemple ici le réseau public Internet. On suppose ici que le terminal 2 dispose d'une adresse IP notée @IP2-NW1 pour communiquer sur ce réseau NW1.

Aucune limitation n'est attachée à la nature du terminal 2. Il peut s'agir d'un ordinateur personnel (Personal Computer en anglais ou PC), d'une tablette numérique, d'un téléphone intelligent (ou smartphone en anglais), etc. De même aucune limitation n'est attachée à la nature de l'interface de communication utilisée par le terminal 2 pour établir une connectivité avec le réseau NW1. Il peut s'agir d'une interface filaire ou sans fil, mobile ou fixe, etc.

On suppose ici que l'utilisateur U est par ailleurs en mesure, via son terminal 2, de se connecter à un réseau NW2 distinct du réseau NW1, via sa connectivité au réseau NW1. Dans l'exemple envisagé à la figure 1, le réseau NW2 est un réseau privé, tel que par exemple un réseau d'une entreprise à laquelle est rattaché l'utilisateur U. Une connexion au réseau NW2 permet à l'utilisateur U d'accéder à différents services offerts par ce réseau, comme par exemple à l'Intranet de l'entreprise, etc. On note que le réseau privé NW2 peut par ailleurs lui-même disposer d'une connectivité au réseau NW1 assuré par exemple par l'intermédiaire d'une passerelle Internet 3.

Dans l'exemple envisagé ici, l'utilisateur U se connecte via son terminal 2 au réseau privé NW2 par l'intermédiaire d'un tunnel de communication 4 établi entre le terminal 2 et le réseau privé NW2 sur le réseau public NW1. Le tunnel de communication 4 est, dans le mode de réalisation décrit ici, un tunnel de communication sécurisé et crypté, aussi plus communément appelé VPN (Virtual Private Network). Ce tunnel s'appuie par exemple sur le protocole IPSec ou sur le protocole IKEv2. L'établissement d'un tel tunnel est une opération connue de l'homme du métier, qui n'est pas détaillée davantage ici.

Lors de l'établissement du tunnel de communication 4, le réseau privé NW2 alloue au terminal 2, par l'intermédiaire d'une passerelle VPN 5, une adresse IP (notée @IP2-NW2) permettant au terminal 2 de communiquer sur le réseau privé NW2 avec d'autres entités du réseau NW2. Cette adresse IP est associée de façon unique, au niveau d'un répertoire d'utilisateurs 6 maintenu par le réseau NW2, à un identifiant de l'utilisateur U, noté ID-U. L'identifiant ID-U est par exemple composé du nom et du prénom de l'utilisateur U. Toutefois aucune limitation n'est attachée à la représentation de cet identifiant.

Le système de communication 1 comprend également un serveur proxy 7 de résolution de noms de domaine (ou serveur proxy DNS 7), conforme à l'invention, et localisé dans le réseau privé NW2. Ce serveur proxy DNS 7 est utilisé notamment ici pour résoudre toutes les requêtes DNS qui lui sont adressées par des terminaux (et notamment par le terminal 2) via un tunnel de communication de type VPN établi avec le réseau NW2 sur un réseau distinct du réseau NW2, comme par exemple le réseau NW1. Autrement dit, le serveur proxy DNS 7 est utilisé pour résoudre au moins toutes les requêtes DNS arrivant de terminaux qui ne sont pas connectés directement au réseau NW2, mais par l'intermédiaire d'un tunnel VPN sécurisé et crypté monté sur un réseau distinct du réseau NW2. Pour résoudre les requêtes DNS qui lui parviennent, le serveur proxy DNS 7 peut, de façon classique, intégrer une base DNS et/ou s'appuyer sur un serveur DNS 8 interne au réseau NW2 et/ou sur un ou plusieurs serveurs DNS (non représentés sur la figure 1) appartenant à d'autres réseaux que le réseau NW2.

Par ailleurs, conformément à l'invention, le terminal 2 est configuré pour transmettre à destination du serveur proxy DNS 7 toutes ses requêtes DNS de résolution de noms de domaine lorsque l'utilisateur U du terminal 2 tente d'accéder via son terminal à des sites web hébergés par exemple sur le réseau NW1 et identifiés par exemple par des URL. De façon connue en soi, de telles URL se présentent sous la forme de chaînes alphanumériques composées de différents éléments, à savoir, un premier élément désignant le protocole considéré (ex. http pour hypertext transfert protocol), un deuxième élément www (pour World Wide Web), et un troisième élément correspondant à un nom de domaine qui indique l'emplacement du site. Ce nom de domaine est plus facile à manipuler en pratique pour les utilisateurs qu'une adresse numérique du site telle qu'une adresse IP. La traduction (i.e. « résolution ») d'un nom de domaine en son adresse IP est assurée par les serveurs DNS. Conformément à l'invention, les résolutions de noms de domaine requises par le terminal 2 (requêtes DNS) sont adressées par celui-ci au serveur proxy DNS 7.

Dans le mode de réalisation décrit ici, la configuration du terminal 2 pour qu'il adresse l'ensemble de ses requêtes DNS au serveur proxy DNS 7 via le tunnel de communication VPN 4 est réalisée lors de l'établissement du tunnel : on suppose à cet effet que la passerelle VPN 5 a transmis au terminal 2 des paramètres de configuration contenant l'adresse IP du serveur proxy DNS 7 (notée @IP7-NW2) et l'instruction d'envoyer toutes ses requêtes DNS à ce serveur proxy DNS 7 via le tunnel de communication VPN 4.

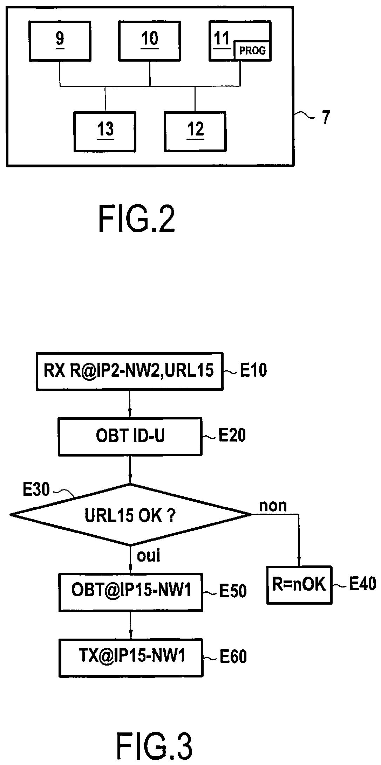

Dans le mode de réalisation décrit ici, le serveur proxy DNS 7 a l'architecture matérielle d'un ordinateur, telle qu'illustrée à la **figure** 2. Il comprend notamment un processeur 9, une mémoire vive 10, une mémoire morte 11, une mémoire flash non volatile 12, ainsi que des moyens de communication 13 comprenant une ou plusieurs interfaces de communication.

Les moyens de communication 13 permettent au serveur proxy DNS 7 de communiquer sur le réseau NW2 ainsi que sur d'autres réseaux, comme par exemple sur le réseau NW1.

La mémoire morte 11 du serveur proxy DNS 7 constitue un support d'enregistrement conforme à l'invention, lisible par le processeur 9 et sur lequel est enregistré un programme d'ordinateur PROG conforme à l'invention.

Le programme d'ordinateur PROG définit des modules fonctionnels (et logiciels ici) du serveur proxy DNS 7, configurés pour mettre en œuvre les étapes du procédé de traitement selon l'invention. Les modules fonctionnels définis par le programme PROG s'appuient sur et/ou commandent les éléments matériels 9-13 du serveur proxy DNS 7 cités précédemment. Ils sont activés sur réception d'une requête DNS d'un terminal (tel que le terminal 2) via un tunnel de communication établi avec le réseau NW2 et monté sur le réseau NW1 (tel que le tunnel VPN 4) et comprennent notamment ici, comme illustré sur la figure 1 :
- un module d'obtention 7A, configuré pour obtenir un identifiant de l'utilisateur à l'origine de la requête DNS, à partir d'au moins une information contenue dans un champ de la requête. Dans le mode de réalisation décrit ici, l'information utilisée par le module d'obtention 7A pour retrouver l'identifiant de l'utilisateur est l'adresse IP source de la requête, qui correspond à l'adresse IP qui a été attribuée au terminal par la passerelle VPN 5 lors du montage du tunnel de communication entre le terminal et le réseau NW2 ;
- un module de détermination 7B, configuré pour déterminer en utilisant l'identifiant de l'utilisateur, si celui-ci est autorisé à accéder ou non au nom de domaine identifié dans la requête DNS. Dans le mode de réalisation décrit ici, les droits d'accès de l'utilisateur au nom de domaine identifié dans la requête DNS sont déterminés par le module de détermination 7B en interrogeant une base de données 14 contenant un ensemble de règles d'accès établies par l'administrateur du réseau NW2, et décrite plus en détail ultérieurement ;
- un module de résolution de noms de domaine 7C ;
- un module d'envoi 7D, activé si l'utilisateur est autorisé à accéder au nom de domaine et configuré pour envoyer au terminal via le tunnel de communication une adresse IP correspondant au nom de domaine accessible par le terminal via notamment le réseau NW1 ; et
- un module de rejet 7E, activé sinon, configuré pour rejeter la requête DNS du terminal.

Comme mentionné précédemment, le serveur DNS proxy 7 est configuré, conformément à l'invention, pour vérifier si le terminal (à savoir ici le terminal 2) qui lui adresse une requête DNS est autorisé, conformément aux règles d'accès fixées par l'administrateur du réseau NW2, à accéder au nom de domaine qui fait l'objet de la requête DNS. Ces règles sont stockées ici dans la base de données 14 et associent à un utilisateur ou à un groupe d'utilisateurs, les noms de domaine ou les URL auxquel(les) ces utilisateurs ont le droit ou non d'accéder. Chaque groupe d'utilisateurs peut être défini par exemple par un identifiant de groupe UGR1, UGR2, etc. et correspondre à une catégorie d'utilisateurs (par exemple « administrateurs réseau », « assistantes », « techniciens », « membres des ressources humaines », etc.). En outre, les URLs ou noms de domaine peuvent être classé(e)s en fonction de leur appartenance à une thématique particulière (par exemple : thématique T1 = « audio/vidéo », thématique T2 = « jeux », thématique T3 = « réseaux sociaux », thématique T4 = « malwares », etc.).

Ceci permet de définir les droits d'accès pour chaque utilisateur ou pour chaque groupe d'utilisateurs en fonction de ces thématiques. A titre illustratif, dans la base de données 14 représentée à la figure 1, les règles d'accès stockées indiquent, pour chaque utilisateur ou groupe d'utilisateurs considéré (UGR1 et UGR2 dans l'exemple), les thématiques d'URLs (T1, T2, T3 ou T4) ou de noms de domaine auxquelles l'accès est autorisé (indiqué par « ok » sur la figure) pour cet utilisateur ou ce groupe d'utilisateurs : l'utilisateur ou le groupe d'utilisateur est alors autorisé à accéder à toutes les URLs ou les noms de domaine correspondant à cette thématique et compris(es) dans la liste d'URLs ou de noms de domaine associée. De façon similaire, les règles d'accès stockées dans la base de données 14 indiquent, pour chaque utilisateur ou groupe d'utilisateurs considéré, les thématiques d'URLs ou de noms de domaine auxquelles l'accès est interdit (indiqué par « nok » sur la figure) pour cet utilisateur ou ce groupe d'utilisateurs : l'utilisateur ou le groupe d'utilisateur n'a alors pas le droit d'accéder à toutes les URLs ou les noms de domaine correspondant à cette thématique et compris(es) dans la liste d'URLs ou de noms de domaine associée.

Dans l'exemple envisagé à la figure 1, les utilisateurs appartenant au groupe d'utilisateurs UGR1 ont le droit d'accéder aux URLs et aux noms de domaine correspondant à la thématique T1 et à la thématique T3, mais l'accès aux URLs et aux noms de domaine correspondant aux thématiques T2 et T4 leur est interdit. Les utilisateurs du groupe UGR2 ont le droit d'accéder aux URLs ou noms de domaine correspondant à toutes les thématiques T1 à T4.

Bien entendu ces exemples ne sont donnés qu'à titre illustratif et d'autres règles d'accès, présentées différemment, peuvent être considérées dans le cadre de l'invention.

Il convient de noter que les règles d'accès stockées dans la base de données 14 sont susceptibles d'évoluer dans le temps et peuvent être aisément mises à jour en temps réel et de façon dynamique par l'administrateur du réseau NW2.

Nous allons maintenant décrire comment ces règles d'accès sont utilisées par le serveur proxy DNS 7 dans le cadre de l'invention.

La **figure** 3 représente les principales étapes du procédé de traitement selon l'invention mises en oeuvre par le serveur proxy DNS 7 pour traiter les requêtes DNS lui provenant du terminal 2, dans un mode particulier de réalisation.

On suppose ici que l'utilisateur U du terminal 2 souhaite accéder à un site web 15 situé dans le réseau NW1 et identifié par une URL notée URL15.

Conformément à sa configuration, le terminal 2 envoie à cet effet, au serveur proxy DNS 7 via le tunnel de communication VPN 4, une requête DNS de résolution du nom de domaine contenu dans l'URL URL15. Cette requête DNS notée R comprend comme adresse IP de destination, l'adresse IP du serveur proxy DNS 7 communiquée lors de l'établissement du tunnel, comme adresse IP source, l'adresse IP @IP2-NW2 allouée au terminal 2 lors de l'établissement du tunnel, et l'URL URL15 contenant le nom de domaine à résoudre.

Sur réception de la requête R par le serveur proxy DNS 7 (étape E10), celui-ci extrait de la requête R l'adresse IP source @IP2-NW2. Puis il obtient, via son module d'obtention 7A, à partir de l'adresse IP @IP2-NW2, en interrogeant le répertoire d'utilisateurs 6, l'identifiant ID-U de l'utilisateur du terminal 2 (étape E20). Il peut également, grâce à l'identifiant ID-U, déterminer à quel(s) groupe(s) d'utilisateurs appartient le cas échéant l'utilisateur U. Cette information peut être stockée dans le répertoire d'utilisateurs 6 du réseau NW2, en association avec l'identifiant ID-U de l'utilisateur U, ou dans une autre base maintenue par le réseau NW2. On suppose par exemple ici que l'utilisateur U appartient au groupe d'utilisateurs UGR1.

Le serveur proxy DNS 7 détermine ensuite, via son module de détermination 7B, si l'utilisateur U identifié par ID-U est autorisé ou non à accéder à l'URL URL15 incluse dans la requête R, ou de façon équivalente au nom de domaine contenu dans cette URL (étape test E30). A cet effet, le module de détermination 7B interroge ici la base de données 14 en utilisant l'identifiant de groupe UGR1 auquel appartient l'utilisateur U et l'URL URL15. On note que si les règles d'accès stockées dans la base de données 14 définissent des droits par utilisateur, le module de détermination 7B peut interroger la base directement avec l'identifiant ID-U de l'utilisateur U.

On suppose ici que l'URL URL15 appartient à la thématique T1 et est contenue dans la liste stockée dans la base de données 14 correspondant à cette thématique. Conformément aux règles d'accès stockées dans la base de données 14, les utilisateurs du groupe UGR1 sont autorisés à accéder aux URLs ou aux noms de domaine correspondant à la thématique T1 (cf. exemple illustré à la figure 1). Le module de détermination 7B détermine donc que l'utilisateur U est autorisé à accéder à l'URL URL15 et au nom de domaine associé (réponse oui à l'étape test E30).

Il en informe le module de résolution 7C de noms de domaine.

Si au contraire, le module de détermination 7B détermine que l'utilisateur U n'est pas autorisé à accéder à l'URL URL15 et au nom de domaine associé selon les règles d'accès définies dans la base de données 14 (réponse non à l'étape test E30), il en informe le module de rejet 7E qui rejette la requête DNS du terminal 2 (étape E40). Dans le mode de réalisation décrit ici, ce rejet se manifeste par une non résolution du nom de domaine contenu dans l'URL URL15 et par l'envoi au terminal 2, via le tunnel de communication VPN 4, d'un message de rejet de sa requête. Ce message peut par exemple s'afficher sur l'écran du terminal 2 de l'utilisateur U et indiquer à l'utilisateur U que l'accès à l'URL URL15 lui est interdit.

Si l'utilisateur U est autorisé à accéder au nom de domaine correspondant à l'URL URL15, le module de résolution 7C procède à la résolution de ce nom de domaine de façon connue en soi (étape E50). Il peut à cet effet consulter une base DNS qui lui est propre et qui associe à divers noms de domaines les adresses IP correspondantes, interroger un ou plusieurs serveurs DNS du réseau NW2 (comme le serveur DNS 8) ou appartenant à des réseaux distants (troisième réseau au sens de l'invention, le troisième réseau pouvant être le réseau NW1), ou déléguer à ces serveurs la résolution du nom de domaine, etc.

Il obtient ainsi l'adresse IP correspondant au nom de domaine de l'URL URL15, notée ici @IP15-NW1.

Puis le serveur proxy DNS 7 envoie, par le biais de son module d'envoi 8D, l'adresse IP obtenue @IP15-NW1 au terminal 2 via le tunnel de communication VPN 4, en réponse à la requête DNS R que lui a adressé le terminal 2 (étape E60).

Sur réception de l'adresse IP @IP15-NW1, le terminal 2 est en mesure, s'il est dûment configuré à cet effet (i.e. pour mettre en œuvre un mécanisme de type « local breakout »), de transmettre ses flux de données à destination de cette adresse directement, via son interface de communication avec le réseau NW1, sans passer par le tunnel de communication VPN 4 (autrement dit, l'envoi des flux de données vers le site 15 par le terminal 2 a lieu en dehors du tunnel de communication VPN 4).

Dans un mode particulier de réalisation, l'envoi au terminal 2 de l'adresse IP résolue @IP15-NW1 par le serveur proxy DNS 7 peut s'accompagner du déclenchement d'une configuration du terminal 2 pour lui permettre de transmettre au moins un flux de données à destination de ladite adresse IP en dehors dudit tunnel de communication. Ceci peut être réalisé à distance par le serveur proxy DNS 7 ou par un autre équipement du réseau NW2 (ex. par un autre serveur non représenté sur la figure 1). Cette configuration dynamique et proactive du terminal 2 permet de s'assurer que, quelle que soit sa configuration initiale (en mode « local breakout » ou en mode communication via le tunnel VPN seulement), celui-ci est bien en mesure de communiquer directement avec le site 15 sans passer par le tunnel de communication VPN 4 lorsque sa table de routage lui indique par exemple que ceci est plus avantageux. Une telle configuration dynamique à distante est permise de façon simple via les protocoles IPSec et IKEv2 couramment employés dans les tunnels de communication VPN.

On note qu'une telle configuration dynamique peut être destinée à être appliquée par le terminal 2 de façon générale dans son traitement des flux de données qu'il souhaite émettre vers le réseau NW1, ou s'accompagner en outre de la spécification par l'équipement du réseau NW2 qui y procède, de plages d'adresses IP, de protocoles, et/ou de ports (source ou destination) auxquels elle s'applique (premier critère au sens de l'invention) et/ou auxquels elle ne s'applique pas (deuxième critère au sens de l'invention).

L'invention a une application privilégiée lorsque le terminal 2 se trouve en situation de mobilité. Elle permet en effet à l'administrateur du réseau NW2, par l'intermédiaire du serveur proxy DNS 7, de filtrer les sites directement accessibles par le terminal 2 sur le réseau NW1 comme si le terminal 2 était connecté directement au réseau NW2 (i.e. sans passer par un tunnel de communication VPN). On évite ainsi une saturation de la bande passante du réseau NW2 et l'expérience de l'utilisateur U est grandement améliorée. En outre elle offre la possibilité à l'administrateur du réseau NW2 de décider quels flux de données il souhaite voir transiter par son réseau (via le tunnel de communication VPN 4) et quels flux de données peuvent être routés en dehors du réseau.

## Revendications

1. Procédé de traitement de requêtes, mis en œuvre par un serveur (7) proxy de résolution de noms de domaine d'un premier réseau de communication (NW2) accessible par un terminal (2) d'un utilisateur via un tunnel de communication (4) établi sur un deuxième réseau de communication (NW1), le serveur proxy (7) étant compris dans ledit premier réseau (NW2), ledit procédé de traitement comprenant, sur réception (E10) d'une requête de résolution d'un nom de domaine en provenance du terminal émise via le tunnel de communication :
- une étape d'obtention (E20) d'un identifiant de l'utilisateur à partir d'au moins une information contenue dans un champ de la requête ;
- une étape de détermination (E30), en utilisant ledit identifiant de l'utilisateur, si cet utilisateur est autorisé à accéder ou non audit nom de domaine ;
- si l'utilisateur est autorisé à accéder au nom de domaine, une étape d'envoi (E60) au terminal via le tunnel de communication d'une adresse IP correspondant au nom de domaine accessible par le terminal via ledit deuxième réseau de communication ;
- sinon, une étape de rejet (E40) de la requête du terminal.

2. Procédé de traitement selon la revendication 1 dans lequel lors de l'étape d'obtention, l'identifiant de l'utilisateur est obtenu par le serveur proxy à partir d'une adresse IP allouée au terminal lors de l'établissement du tunnel de communication contenue dans la requête.

3. Procédé de traitement selon la revendication 1 ou 2 dans lequel l'étape de détermination comprend l'interrogation d'au moins un serveur de résolution (8) de noms de domaine appartenant au premier réseau ou à un troisième réseau distinct du premier réseau.

4. Procédé de traitement selon l'une quelconque des revendications 1 à 3 comprenant en outre, si l'utilisateur est autorisé à accéder au nom de domaine, une étape de déclenchement d'une configuration du terminal par un équipement du premier réseau pour lui permettre de transmettre au moins un flux de données à destination de ladite adresse IP en dehors dudit tunnel de communication.

5. Programme (PROG) d'ordinateur comportant des instructions pour l'exécution des étapes du procédé de traitement selon l'une quelconque des revendications 1 à 4 lorsque ledit programme est exécuté par un ordinateur.

6. Support d'enregistrement (11) lisible par un ordinateur sur lequel est enregistré un programme d'ordinateur selon la revendication 5.

7. Serveur (7) proxy de résolution de noms de domaine appartenant à un premier réseau de communication accessible par un terminal d'un utilisateur via un tunnel de communication établi sur un deuxième réseau de télécommunications, ledit serveur proxy comprenant une pluralité de modules activés sur réception d'une requête de résolution d'un nom de domaine en provenance du terminal émise via le tunnel de communication, ladite pluralité de modules comprenant :
- un module d'obtention (7A), configuré pour obtenir un identifiant de l'utilisateur à partir d'au moins une information contenue dans un champ de la requête ;
- un module de détermination (7B), configuré pour déterminer en utilisant ledit identifiant de l'utilisateur, si cet utilisateur est autorisé à accéder ou non audit nom de domaine ;
- un module d'envoi (7D), activé si l'utilisateur est autorisé à accéder au nom de domaine et configuré pour envoyer au terminal via le tunnel de communication une adresse IP correspondant au nom de domaine accessible par le terminal via ledit deuxième réseau de communication ; et
- un module de rejet (7E), activé sinon, configuré pour rejeter la requête du terminal.

8. Système de communication (1) comprenant :
- un terminal (2) d'un utilisateur, configuré pour établir avec un premier réseau de communication, un tunnel de communication (4) sur un deuxième réseau de communication ; et
- un serveur (7) proxy de résolution de noms de domaine du premier réseau de communication, conforme à la revendication 7 ;
ledit terminal étant en outre configuré pour :
- envoyer au serveur proxy, via le tunnel de communication, toutes ses requêtes de résolution de noms de domaine ; et pour
- lorsqu'il reçoit du serveur proxy en réponse à une requête de résolution d'un nom de domaine une adresse IP correspondant audit nom de domaine, pouvoir transmettre au moins un flux de données à destination de ladite adresse IP en dehors dudit tunnel de communication.

9. Système de communication (1) selon la revendication 8 comprenant en outre un équipement appartenant au premier réseau de communication, activé lorsque l'utilisateur est autorisé à accéder au nom de domaine, et paramétré pour configurer le terminal pour lui permettre de transmettre un flux de données à destination de ladite adresse IP en dehors dudit tunnel de communication.

10. Système de communication (1) selon la revendication 8 comprenant en outre un équipement appartenant au premier réseau de communication, et paramétré pour configurer le terminal pour :
- lui permettre de transmettre au moins un flux de données en dehors dudit tunnel de communication lorsque ledit flux de données vérifie au moins un premier critère prédéterminé ; et/ou
- lui imposer de transmettre au moins un flux de données via ledit tunnel de communication lorsque ledit flux de données vérifie au moins un deuxième critère prédéterminé, lesdits premier et deuxième critères portant au moins sur une adresse IP ou une plage d'adresses IP ou un protocole ou un port de communication.

11. Système de communication (1) selon l'une quelconque des revendications 8 à 10 dans lequel le tunnel de communication est sécurisé.

## Patentansprüche

1. Verfahren zur Verarbeitung von Anfragen, durchgeführt von einem Proxy-Server (7) zur Auflösung von Domain-Namen eines ersten Kommunikationsnetzes (NW2), das durch ein Endgerät (2) eines Benutzers über einen Kommunikationstunnel (4) zugänglich ist, der über ein zweites Kommunikationsnetz (NW1) aufgebaut ist, wobei der Proxy-Server (7) im ersten Netz (NW2) enthalten ist, wobei das Verfahren zur Verarbeitung nach Empfang (E10) einer Anfrage zur Auflösung eines Domain-Namens vom Endgerät, die über den Kommunikationstunnel gesendet wird, umfasst:
- einen Schritt des Erhaltens (E20) einer Kennung des Benutzers auf Grundlage mindestens einer Information, die in einem Feld der Anfrage enthalten ist;
- einen Schritt des Bestimmens (E30) anhand der Kennung des Benutzers, ob dieser Benutzer autorisiert ist, auf den Domain-Namen zuzugreifen oder nicht;
- wenn der Benutzer autorisiert ist, auf den Domain-Namen zuzugreifen, einen Schritt des Sendens (E60) einer IP-Adresse, die dem Domain-Namen entspricht, der durch das Endgerät über das zweite Kommunikationsnetz zugänglich ist, über den Kommunikationstunnel an das Endgerät;
- wenn nicht, einen Schritt des Ablehnens (E40) der Anfrage des Endgeräts.

2. Verfahren zur Verarbeitung nach Anspruch 1, wobei im Schritt des Erhaltens die Kennung des Benutzers auf der Grundlage einer in der Anfrage enthaltenen IP-Adresse, die dem Endgerät beim Aufbau des Kommunikationstunnels zugewiesen wird, durch den Proxy-Server erhalten wird.

3. Verfahren zur Verarbeitung nach Anspruch 1 oder 2, wobei der Schritt des Bestimmens die Abfrage mindestens eines Domain-Namen-Auflösungsservers (8) umfasst, der zu dem ersten Netz oder einem vom ersten Netz verschiedenen dritten Netz gehört.

4. Verfahren zur Verarbeitung nach Anspruch 1 bis 3, außerdem umfassend einen Schritt des Auslösens einer Endgerätekonfiguration durch eine Einrichtung des ersten Netzes, um ihm zu ermöglichen, mindestens einen Datenfluss außerhalb des Kommunikationstunnels an die IP-Adresse zu übermitteln, wenn der Benutzer autorisiert ist, auf den Domain-Namen zuzugreifen.

5. Computerprogramm (PROG), umfassend Anweisungen zur Ausführung von Schritten des Verfahrens zur Verarbeitung nach einem der Ansprüche 1 bis 4, wenn das Programm durch einen Computer ausgeführt wird.

6. Computerlesbares Speichermedium (11), auf dem ein Computerprogramm nach Anspruch 5 gespeichert ist.

7. Proxy-Server (7) zur Auflösung von Domain-Namen, der zu einem ersten Kommunikationsnetz gehört, das durch ein Endgerät eines Benutzers über einen Kommunikationstunnel zugänglich ist, der über ein zweites Kommunikationsnetz aufgebaut ist, wobei der Proxy-Server eine Vielzahl von Modulen umfasst, die bei Empfang einer vom Terminal über den Kommunikationstunnel gesendeten Anfrage zur Auflösung eines Domain-Namens aktiviert wird, wobei die Vielzahl von Modulen umfasst:
- ein Modul zum Erhalten (7A), konfiguriert zum Erhalten einer Kennung des Benutzers auf Grundlage mindestens einer Information, die in einem Feld der Anfrage enthalten ist;
- ein Modul zum Bestimmen (7B), konfiguriert zum Bestimmen anhand der Kennung des Benutzers, ob dieser Benutzer autorisiert ist, auf den Domain-Namen zuzugreifen oder nicht;
- ein Modul zum Senden (7D), das aktiviert wird, wenn der Benutzer autorisiert ist, auf den Domain-Namen zuzugreifen, und dazu konfiguriert ist, über den Kommunikationstunnel eine IP-Adresse, die dem Domain-Namen entspricht, der durch das Endgerät über das zweite Kommunikationsnetz zugänglich ist, an das Endgerät zu senden;
- ein Modul zum Ablehnen (7E), das aktiviert wird, wenn nicht, und dazu konfiguriert ist, die Anfrage des Endgeräts abzulehnen.

8. Kommunikationssystem (1), umfassend:
- ein Endgerät (2) eines Benutzers, das dazu konfiguriert ist, mit einem ersten Kommunikationsnetz einen Kommunikationstunnel (4) über ein zweites Kommunikationsnetz aufzubauen; und
- einen Proxy-Server (7) zur Auflösung von Domain-Namen des ersten Kommunikationsnetzes nach Anspruch 7; wobei das Endgerät außerdem zu Folgendem konfiguriert ist:
- Senden aller seiner Anfragen zur Auflösung von Domain-Namen über den Kommunikationstunnel an den Proxy-Server; und zum
- Übermittelnkönnen mindestens eines Datenflusses an die IP-Adresse außerhalb des Kommunikationstunnels, wenn es vom Proxy-Server als Antwort auf eine Anfrage zur Auflösung eines Domain-Namens eine IP-Adresse enthält, die dem Domain-Namen entspricht.

9. Kommunikationssystem (1) nach Anspruch 8, außerdem umfassend eine Einrichtung, die zu dem ersten Kommunikationsnetz gehört und aktiviert wird, wenn der Benutzer autorisiert ist, auf den Domain-Namen zuzugreifen, und eingerichtet ist, um das Endgerät dazu zu konfigurieren, ihm zu ermöglichen, außerhalb des Kommunikationstunnels einen Datenfluss an die IP-Adresse zu übermitteln.

10. Kommunikationssystem (1) nach Anspruch 8, außerdem umfassend eine Einrichtung, die zu dem ersten Kommunikationsnetz gehört und dazu eingestellt ist, um das Endgerät zu Folgenden zu konfigurieren:
- ihm zu ermöglichen, mindestens einen Datenfluss außerhalb des Kommunikationstunnels zu übermitteln, wenn der Datenfluss mindestens ein erstes vorgegebenes Kriterium bestätigt; und/oder
- ihm aufzuerlegen, mindestens einen Datenfluss über den Kommunikationstunnel zu übermitteln, wenn der Datenfluss mindestens ein zweites vorgegebenes Kriterium bestätigt, wobei sich das erste und das zweite Kriterium mindestens auf eine IP-Adresse oder einen IP-Adressbereich oder ein Protokoll oder einen Kommunikationsanschluss beziehen.

11. Kommunikationssystem (1) nach einem der Ansprüche 8 bis 10, wobei der Kommunikationstunnel gesichert ist.

## Claims

1. Method for processing requests, implemented by a domain name resolution proxy server (7) of a first communication network (NW2) accessible by a terminal (2) of a user via a communication tunnel (4) established to a second communication network (NW1), the proxy server (7) being included in said first network (NW2), said processing method comprising, on receiving (E10) a request for resolution of a domain name from the terminal, sent via the communication tunnel:
- a step of obtaining (E20) an identifier of the user on the basis of at least one item of information contained in a field of the request;
- a step of determining (E30), using said identifier of the user, whether or not this user is authorized to access said domain name;
- if the user is authorized to access the domain name, a step of sending (E60) the terminal, via the communication tunnel, an IP address corresponding to the domain name accessible by the terminal via said second communication network;
- otherwise, a step of rejecting (E40) the request from the terminal.

2. Processing method according to Claim 1, wherein, in the obtaining step, the identifier of the user is obtained by the proxy server on the basis of an IP address, allocated to the terminal during the establishment of the communication tunnel, contained in the request.

3. Processing method according to Claim 1 or 2, wherein the determining step comprises interrogating at least one domain name resolution server (8) belonging to the first network or to a third network distinct from the first network.

4. Processing method according to any one of Claims 1 to 3, further comprising, if the user is authorized to access the domain name, a step of triggering a configuration of the terminal by an item of equipment of the first network to allow it to transmit at least one data stream to said IP address outside of said communication tunnel.

5. Computer program (PROG) comprising instructions for executing the steps of the processing method according to any one of Claims 1 to 4 when said program is executed by a computer.

6. Computer-readable storage medium (11) on which a computer program according to Claim 5 is stored.

7. Domain name resolution proxy server (7) belonging to a first communication network accessible by a terminal of a user via a communication tunnel established to a second communication network, said proxy server comprising a plurality of modules activated on receiving a request for the resolution of a domain name from the terminal, sent via the communication tunnel, said plurality of modules comprising:
- an obtaining module (7A), configured to obtain an identifier of the user on the basis of at least one item of information contained in a field of the request;
- a determining module (7B), configured to determine, using said identifier of the user, whether or not this user is authorized to access said domain name;
- a sending module (7D), activated if the user is authorized to access the domain name and configured to send the terminal, via the communication tunnel, an IP address corresponding to the domain name accessible by the terminal via said second communication network; and
- a rejecting module (7E), activated otherwise, configured to reject the request from the terminal.

8. Communication system (1) comprising:
- a terminal (2) of a user, configured to establish, with a first communication network, a communication tunnel (4) to a second communication network; and
- a domain name resolution proxy server (7) of the first communication network, in accordance with Claim 7;
said terminal being further configured to:
- send the proxy server, via the communication tunnel, all of its domain name resolution requests; and,
- when it receives an IP address corresponding to a domain name from the proxy server in response to a request to resolve said domain name, to be able to transmit at least one data stream to said IP address outside of said communication tunnel.

9. Communication system (1) according to Claim 8, further comprising an item of equipment belonging to the first communication network, activated when the user is authorized to access the domain name, and set to configure the terminal to allow it to transmit a data stream to said IP address outside of said communication tunnel.

10. Communication system (1) according to Claim 8, further comprising an item of equipment belonging to the first communication network, and set to configure the terminal to:
- allow it to transmit at least one data stream outside of said communication tunnel when said data stream satisfies at least a first predetermined criterion; and/or
- require it to transmit at least one data stream via said communication tunnel when said data stream satisfies at least a second predetermined criterion, said first and second criteria pertaining at least to an IP address, a range of IP addresses, a communication port or protocol.

11. Communication system (1) according to any one of Claims 8 to 10, wherein the communication tunnel is secure.
